## Europäisches Patentamt

(19) **European Patent Office**

**Office européen des brevets**

(11) Numéro de publication: **0 147 894
B1**

(12) **FASCICULE DE BREVET EUROPEEN**

(45) Date de publication du fascicule du brevet:
**19.11.87**

(51) Int. Cl.⁴: **G 02 B 23/10, G 02 B 27/30**

(21) Numéro de dépôt: **84201871.5**

(22) Date de dépôt: **14.12.84**

(54) **Dispositif pour projeter l'image d'un réticule dans un système optique.**

(30) Priorité: **23.12.83 FR 8320692**

(43) Date de publication de la demande:
**10.07.85 Bulletin 85/28**

(45) Mention de la délivrance du brevet:
**19.11.87 Bulletin 87/47**

(84) Etats contractants désignés:
**DE FR GB IT NL**

(56) Documents cités:
**DE - B - 2 205 325
FR - A - 2 277 351
FR - A - 2 278 090
US - A - 2 725 781
US - A - 2 891 437**

(73) Titulaire: **TELECOMMUNICATIONS
RADIOELECTRIQUES ET TELEPHONIQUES T.R.T.,
88, rue Brillat Savarin, F-75013 Paris (FR)**
(84) Etats contractants désignés: **FR**

(73) Titulaire: **N.V. Philips' Gloeilampenfabrieken,
Groenewoudseweg 1, NL-5621 BA Eindhoven (NL)**
(84) Etats contractants désignés: **DE GB IT NL**

(72) Inventeur: **Loy, Fernand René Société Civile S.P.I.,
209 rue de l'Université, F-75007 Paris (FR)**

(74) Mandataire: **Chaffraix, Jean et al, Société Civile
S.P.I.D. 209, rue de l'Université, F-75007 Paris (FR)**

## Description

La présente invention concerne un dispositif pour projeter l'image d'un réticule dans un système optique dont la ligne de visée est matérialisée par ledit réticule, dispositif comprenant un collimateur situé en bordure de la pupille d'un objectif dudit système optique, ledit objectif ayant son axe optique confondu avec la ligne de visée. (FR-A-2 277 351; DE-C 2 205 325).

L'invention trouve une application importante bien que non limitative dans les caméras thermiques utilisées pour la visée, le tir au canon ou le tir des missiles et pour lesquelles la ligne de visée doit être harmonisée avec le système d'armes. La précision du tir dépend de la qualité de cette harmonisation qui doit se conserver dans l'environnement militaire.

Il existe de nombreuses façons de créer un réticule. L'une d'elles consiste à disposer devant la caméra thermique un collimateur qui projette dans la caméra l'image d'un réticule qui se superpose à l'image du paysage. La stabilité de la ligne de visée ne dépend dans ce cas que du collimateur. Cette propriété est importante car il est beaucoup plus facile d'assurer la fixité d'un collimateur de petites dimensions que d'une caméra thermique qui est un ensemble optique complexe avec de grandes optiques.

Toutefois, le collimateur doit être situé au centre de la pupille de la caméra thermique. Pour toute autre disposition du collimateur, entre autres sur le bord de la pupille, une erreur de focalisation entraîne une erreur angulaire de la ligne de visée.

Cette disposition du collimateur au centre de la pupille de la caméra n'est pas toujours réalisable pour des raisons d'encombrement ou de fixation mécanique. Elle est même impossible dans le cas où la caméra est équipée d'un objectif Zoom ou multifocale car, à ouverture numérique constante, le diamètre de la pupille est plus petit en courte focale et le collimateur masque totalement la pupille empêchant la vision du paysage.

Le but de l'invention est de proposer un dispositif permettant de placer le collimateur en bordure de la pupille sans que la direction de la ligne de visée dépende de la focalisation de l'objectif de la caméra ou de tout autre système optique.

Ce dispositif est caractérisé en ce que ledit collimateur est décomposé en deux collimateurs élémentaires disposés suivant des axes orthogonaux et perpendiculaires à l'axe optique, le premier collimateur élémentaire formant l'image d'une première fente radiale, le second collimateur élémentaire identique au précédent formant l'image d'une seconde fente radiale perpendiculaire à la première image de telle façon que l'intersection desdites images soit sur la ligne de visée.

Les pupilles desdits premier et second collimateurs élémentaires ont une forme rectangulaire avec le grand côté du rectangle perpendiculaire à la direction de la fente correspondante. Une telle disposition permet, à surface égale de pupille, de réduire l'effet de la diffraction dans l'image de la fente et d'obtenir des tranches fines.

La description suivante en regard des dessins annexés, le tout donné à titre d'exemple fera bien comprendre comment l'invention peut être réalisée.

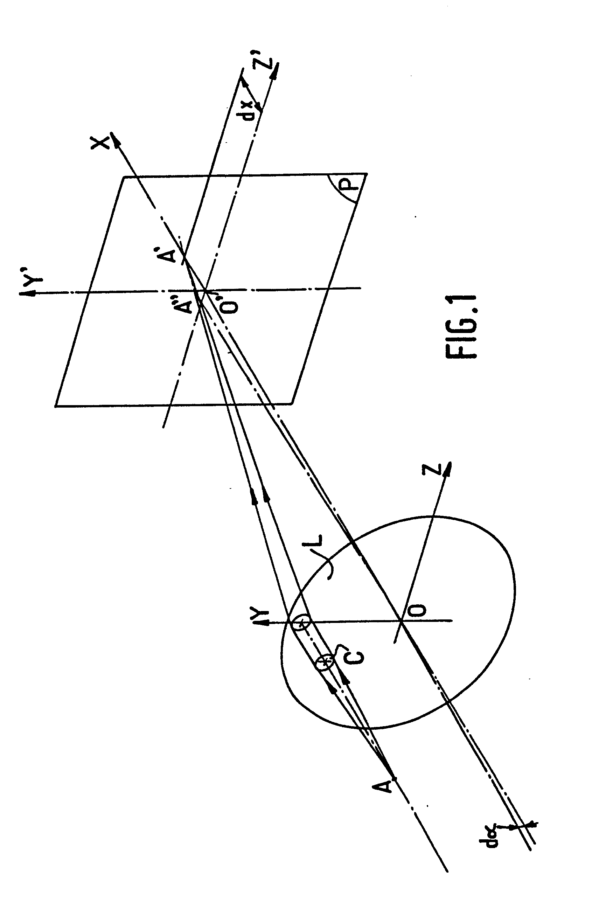

Le schéma de la figure 1 met en évidence l'erreur d'harmonisation résultant d'un défaut de focalisation lorsque le collimateur est situé au bord de la pupille.

La figure 2 représente le schéma de principe du dispositif conforme à l'invention.

Les figures 3a et 3b représentent respectivement le réticule tel qu'il est vu par la caméra thermique pour une focalisation parfaite et pour un défaut de focalisation.

La figure 4 montre le schéma d'une réalisation du dispositif conforme à l'invention sous la forme de miroirs.

Sur la figure 1, l'objectif est une lentille convergente ayant pour centre optique O et pour ligne de visée OX.

Le collimateur C repéré par rapport aux axes orthogonaux OY et OZ perpendiculaires à OX et situé au bord de la pupille de l'objectif L donne d'un point A une image A'.

En cas d'erreur de focalisation, le plan de focalisation P traversé en O' par la ligne de visée se trouve translaté d'une longueur dx. L'image formée dans ce plan est repérée par rapport aux axes O'Y' et O'Z' respectivement parallèles aux axes OY et OZ. On voit que l'image de A est alors déportée en A'' et que la ligne de visée est déviée d'un angle dα.

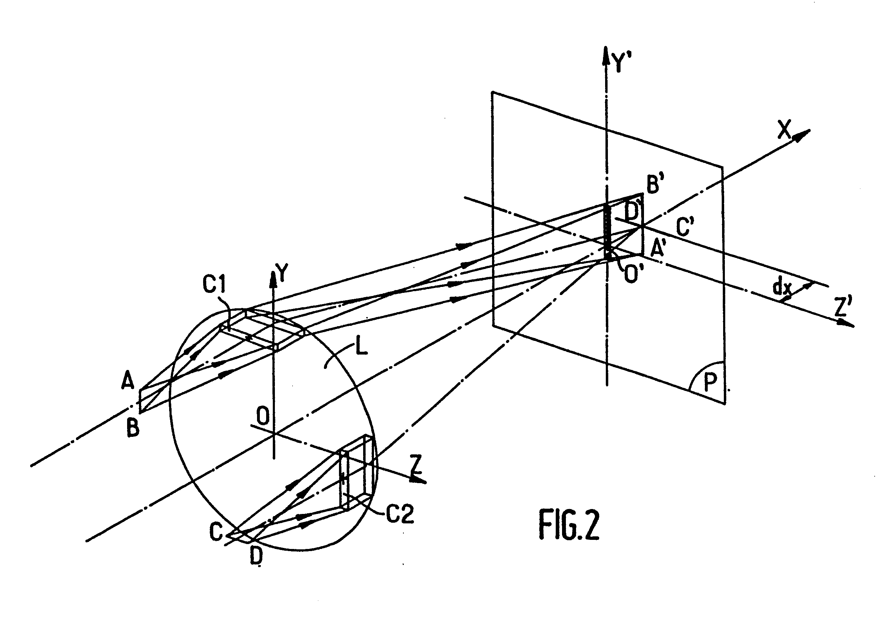

Pour pallier cet inconvénient, le dispositif schématisé sur la figure 2 comporte, conformément à l'invention, deux collimateurs élémentaires C1 et C2 disposés en bordure de la pupille de l'objectif L suivant les axes OY et OZ respectivement.

Le collimateur C1 projette en A'B' l'image d'une fente radiale AB parallèle à l'axe OY. Le collimateur C2 identique au précédent projette de même en C'D' l'image d'une fente radiale CD parallèle à l'axe OZ de façon que l'intersection de A'B' avec C'D' soit sur la ligne de visée OX.

Le tracé des rayons n'est représenté que pour le collimateur C; pour ne pas surcharger la figure.

On remarque que si le plan de focalisation P de l'objectif L ne contient pas les images A'B' et C'D', le défaut de focalisation étant dx, l'intersection du faisceau de C1 avec le plan P se translate suivant l'axe O'Y' mais que la croisée des deux branches du réticule reste sur l'axe OX.

Les axes optiques des collimateurs C1 et C2 coupent respectivement les axes OY et OZ sur le bord de la pupille de l'objectif de centre O lorsque l'objectif est en longue focale (cas d'un Zoom ou d'un objectif multifocal) car c'est dans ce cas que s'opère la visée. En courte focale, utilisée pour l'observation dans un champ plus large, le diamètre de la pupille est plus petit à ouverture numérique constante, le faisceau des collimateurs ne rentre plus dans l'objectif et le réticule disparaît.

Afin de réduire l'effet de la diffraction dans l'image de la fente, les pupilles des collimateurs C1 et C2 sont représentées rectangulaires avec le grand côté perpendiculaire à la direction de la fente.

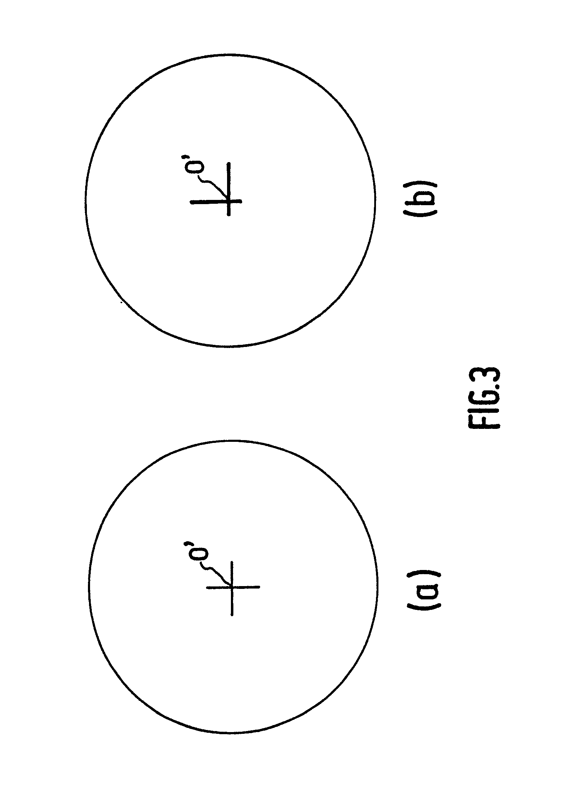

Les figures 3a et 3b montrent les vues du réticule correspondant respectivement à un objectif focalisé et à un objectif défocalisé. Dans ce dernier cas les deux branches du réticule subissent une translation suivant leurs axes respetifs mais leur intersection en O' reste fixe.

Ce type de collimateur convient pour des réticules à deux branches perpendiculaires ou non.

Il existe de multiples façons de réaliser pratiquement ces collimateurs avec des lentilles ou des miroirs.

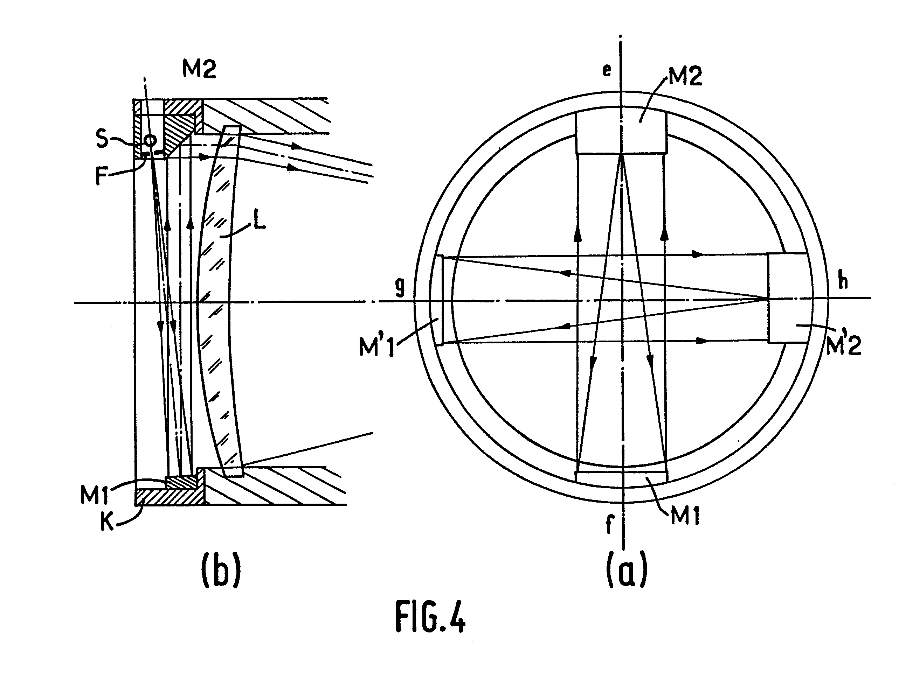

Une disposition avantageuse en compacité et en simplicité est représentée schématiquement en vue de face sur la figure 4a et en coupe transversale suivant la ligne diamétrale ef sur la figure 4b. Il s'agit d'une solution à miroir qui présente l'avantage de pouvoir être réglée en lumière visible et utilisée dans un large domaine spectral. Ses caractéristiques sont constantes en température.

Le collimateur disposé suivant la ligne diamétrale ef et dont tous les composants apparaissent sur la vue en coupe de la figure 4b comporte une source S éclairant une fente F placée au foyer d'un miroir sphérique M1. Ce miroir renvoie le faisceau dans l'objectif L de la caméra après réflexion sur le miroir plan M2 disposé entre la fente F et l'objectif L et incliné de 45° par rapport à la direction de la ligne de visée. L'autre collimateur comportant les miroirs M' 1 et M' 2 est disposé à 90° du précédent suivant la ligne diamétrale gh. Les différents composants de ces collimateurs sont montés dans une couronne métallique K placée à l'avant de l'objectif.

Ce dispositif est particulièrement adapté à une caméra thermique mais son principe est applicable à tout système optique sans discernement de longueur d'onde.

## Revendications

1. Dispositif pour projeter l'image d'un réticule dans un système optique dont la ligne de visée est matérialisée par ledit réticule, dispositif comprenant un collimateur situé en bordure de la pupille d'un objectif dudit système optique, ledit objectif ayant son axe optique confondu avec la ligne de visée, caractérisé en ce que ledit collimateur est décomposé en deux collimateurs élémentaires (C1, C2) disposés suivant des axes orthogonaux perpendiculaires à l'axe optique, le premier collimateur élémentaire (C1) formant l'image (A' B') d'une première fente radiale (AB), le second collimateur élémentaire identique au précédent formant l'image (C' D') d'une seconde fente radiale (CD) perpendiculaire à la première image, de telle façon que l'intersection desdites images soit sur la ligne de visée.

2. Dispositif selon la revendication 1, caractérisé en ce que les pupilles desdits premier et second collimateurs élémentaires ont une forme rectangulaire avec le grand côté du rectangle perpendiculaire à la direction de la fente correspndante.

3. Dispositif selon l'une des revendications 1 ou 2, caractérisé en ce que chacun desdits collimateurs élémentaires est réalisé sous la forme de miroirs et comporte une source lumineuse (S) éclairant la fente correspondante (F) placée au foyer d'un miroir sphérique (M1) qui renvoie le faisceau lumineux issu de la fente sur un miroir plan (M2) disposé entre ladite fente et ledit objectif (L) et incliné de 45° par rapport à la direction de la ligne de visée, ledit faisceau traversant ensuite cet objectif pour former une image de la fente centrée sur la ligne de visée, les différents composants desdits collimateurs étant montés dans une couronne (K) fixée à l'avant de l'objectif du système optique.

## Patentansprüche

1. Strichmarkenprojektor in einem optischen System, dessen Visierlinie durch die Strichmarke dargestellt wird, wobei dieser Projektor einen am Rande der Pupille eines Objektivs des optischen Systems angeordneten Kollimator enthält und die optische Achse des Objektivs mit der Visierlinie zusammenfällt, dadurch gekennzeichnet, dass der Kollimator aus zwei Elementarkollimatoren (C1, C2) zusammengesetzt ist, die auf orthogonalen und senkrecht zur optischen Achse verlaufenden Achsen angeordnet sind, wobei der erste Elementarkollimator (C1) das Bild (A' B') eines ersten radialen Schlitzes (AB), und der zweite Elementarkollimator, der dem ersten Elementarkollimator identisch ist, das Bild (C' D') eines zweiten radialen Schlitzes (CD) senkrecht zum ersten Bild formt, derart dass sich der Schnittpunkt dieser Bilder auf der Visierlinie befindet.

2. Projektor nach Anspruch 1, dadurch gekennzeichnet, dass die Pupillen der ersten und zweiten Elementarkollimatoren eine Rechteckform haben, dessen längere Seite senkrecht zur Richtung des entsprechenden Schlitzes verläuft.

3. Projektor nach einem der Ansprüche 1 oder 2, dadurch gekennzeichnet, dass jeder der Elementarkollimatoren in Spiegelform verwirklicht ist und eine Lichtquelle (S) enthält, die den entsprechenden im Brennpunkt eines sphärischen Spiegels (M1) angeordneten Schlitz (F) anstrahlt, und der sphärische Spiegel den durch den Schlitz tretenden Lichtstrahl auf einen flachen Spiegel (M2) wirft, der zwischen dem Schlitz und dem Objektiv (L) angeordnet und in bezug auf die Richtung der Visierlinie über 45° geneigt ist, wonach der Lichtstrahl durch das Objektiv zum Formen eines Bildes des auf der Visierlinie zentrierten Schlitzes fällt, wobei die verschiedenen Bauteile der Kollimatoren in einer Fassung (K) montiert sind, die vor dem Objektiv des optischen Systems befestigt ist.

## Claims

1. A device for projecting the image of a reticle in an optical system whose line of sight is represented by said reticle, which device comprises a collimator situated at the edge of the pupil of an objective of said optical system, said objective having an optical axis which coincides with the line of sight, characterized in that said collimator comprises two sub-collimators (C1, C2) arranged along mutually orthogonal axes perpendicular to the optical axis, of which the first sub-collimator (C1) forms the image (A' B') of a first radial slit (AB) and the second sub-collimator, which is identical to the preceding sub-collimator, forms the image (C′ D′ ) of a second radial slit (CD) which is perpendicular to the first image, in such a way that the intersection of said images is situated on the line of sight.

2. A device as claimed in claim 1, characterized in that the pupils of said first and said second sub-collimator each have a rectangular shape with the long side of the rectangle perpendicular to the direction of the corresponding slit.

3. A device as claimed in claim 1 or 2, characterized in that each of said sub-collimators comprises mirrors and a light source (5) and a light source (5) which illuminates the corresponding slit (F) which is situated in the focus of a spherical mirror (M1) which reflects the light beam which issues from the slit onto a plane mirror (M2) which is arranged between said slit and said objective (L) and which is disposed at 45° relative to the direction of the line of sight, which beam subsequently traverses said objective to form an image of the slit which is centred on the line of sight, the various components of said collimators being mounted in a ring (K1) which is secured to the front of the objective of the optical system.

FIG.1

0 147 894

FIG.2

(a)

(b)

FIG.3

0 147 894

M2

S

F

L

M1

K

(b)

e

M2

g

M'1

h

M'2

f

M1

(a)

FIG.4